# EUROPEAN PATENT SPECIFICATION

(11) **EP 2 381 550 B1**
(45) Date of publication and mention of the grant of the patent: **25.04.2018**
(21) Application number: 11162880.6
(22) Date of filing: 18.04.2011
(51) Int. Cl.: H02G 3/04, H02G 3/06, H02G 9/04

(54) **Cable conduit**
Kabelkanal
Gaine de câbles

(30) Priority: 20.04.2010 DK 201070157
(43) Date of publication of application: 26.10.2011
(73) Proprietor: PF GROUP A/S, 7480 Vildbjerg (DK)
(72) Inventor: Habekost, Michael, 7490, Aulum (DK)
(74) Representative: Nielsen, Leif

(56) References cited:
- DE-A1- 2 516 404
- DE-A1- 3 447 836
- DE-U1-202004 019 942
- DE-U1-202008 009 852
- GB-A- 919 494
- GB-A- 2 467 443
- US-B1- 6 216 746

## Description

### Field of the Invention

The present invention concerns use of a cable conduit in railway installations and of the type with:
- a number of channels for receiving cables and with an upwardly open U-shaped cross-section with a bottom plate and two sidewalls at each side of the bottom plate;
- covers for covering the channels; and
- connecting plates for connecting succeeding channels disposed in continuation of each other for forming a continuous channel, and which are covered by each their cover, where channels, covers and connecting plates are formed of metal, where each cover has a downwardly open U-shaped cross-section with a cover plate and two lateral flanges at each side of the cover plate, where the lateral flanges of the cover are spaced apart corresponding to the outer distance between the sidewalls of the channel such that the cover can be placed over the channel with an inner side of its lateral flanges extending down along the outer side of the sidewalls of the channel, where connecting means are provided at the sidewalls of the channel and lateral flanges of the cover for mutual connection of a channel and an associated cover, where at least a larger central first area of the bottom plate of the channel is delimited by smaller second end areas at the opposing ends of the channel, where the first area is provided with perforations that are evenly distributed across the entire first area, serving as ventilation and drain holes, where a rim area around the perforations is pressed downwards from the inner side of the channel, preferably such that frusto-conical projections appear around each perforation at the bottom side of the channel.

Furthermore, the invention relates to such cable conduit of the type with:
- a number of channels for receiving cables and with an upwardly open U-shaped cross-section with a bottom plate and two sidewalls at each side of the bottom plate;
- covers for covering the channels; and
- connecting plates for connecting succeeding channels disposed in continuation of each other for forming a continuous channel, and which are covered by each their cover, where channels, covers and connecting plates are formed of metal, where each cover has a downwardly open U-shaped cross-section with a cover plate and two lateral flanges at each side of the cover plate, where the lateral flanges of the cover are spaced apart corresponding to the outer distance between the sidewalls of the channel such that the cover can be placed over the channel with an inner side of its lateral flanges extending down along the outer side of the sidewalls of the channel, where connecting means are provided at the sidewalls of the channel and lateral flanges of the cover for mutual connection of a channel and an associated cover, where at least a larger central first area of the bottom plate of the channel is delimited by smaller second end areas at the opposing ends of the channel, where the first area is provided with perforations that are evenly distributed across the entire first area, serving as ventilation and drain holes, where a rim area around the perforations is pressed downwards from the inner side of the channel, preferably such that frusto-conical projections appear around each perforation at the bottom side of the channel.

### Background of the Invention

Cable conduits for railway installations are prior art. Electric cables for high voltage and low voltage are placed in these cable conduits. Moreover, cable conduits may also be used for control cables. Cable conduits may, however, also be used in other locations where instead of burying electric cables it is desired to locate them in channels.

For many years, cable conduits have been made of concrete and also partly of plastic. In recent years it has been proposed to make cable conduits of metal. Examples thereof are known e.g. from DE 34 47 836 and US 2007 144754. The metal conduits are used for screening the magnetic fields formed by the electric conductors. By metal conduits is also achieved an advantageous weight saving compared with concrete conduits. From US 6 216 746 is furthermore known a cable conduit of the kind mentioned in the introduction where a hinge connection is formed between channels and covers. This enables laying of cables in long cable conduits from the top of the channel with the covers opened. Thereby no risk of damage to the cable due to drawing of cables through the cable conduits will exist. This document does not gives any solution to cable conduit have high strength and low weight. From DE 20 2004 019942 U1 is known a channel with ventilation holes evenly distributed across the entire first area and from DE 25 16 404 A1 it is known that replacing steel by aluminium is a way of losing weight.

No document shows an amelioration of the magnetic field protection in combination with a good drainage/ventilation of the channel.

In the prior art cable conduits, however, there is uncertainty and difficulty by achieving sufficient tightness and security for draining water if ingress of water occurs in the cable conduit.

It is also desired to minimise the risk that plants grow into cable conduits located close to the ground surface. If the cable conduits have openings there is a risk of plants growing in through the openings.

Moreover, in practice very long cable conduits are normally constructed in which very long cables are drawn, and therefore there is a risk of damage to the cables when they are drawn through the cable conduits.

### Object of the Invention

The object of the present invention is to relieve these disadvantages by the prior art cable conduits of metal, and which are suited for disposition close to the ground surface, preferably by railway installations.

### Description of the Invention

According to the present invention, this is achieved by a use of a cable conduit of the type mentioned in the introduction, which is peculiar in that at least a larger central first area of the bottom plate of the channel is delimited by smaller second end areas at the opposing ends of the channel, where the first area is provided with perforations that are evenly distributed across the entire first area and wherein the channel is made of aluminium and that the cover and the connecting plate is made of steel.

The cable conduit is peculiar in that at least a larger central first area of the bottom plate of the channel is delimited by smaller second end areas at the opposing ends of the channel, where the first area is provided with perforations that are evenly distributed across the entire first area and wherein the channel is made of aluminium and that the cover and the connecting plate is made of steel.

The cover will usually be made of high strength steel and the connecting plate of nonmagnetic stainless steel. Hereby is achieved a simple design where the steel constitutes a screen for magnetic fields. By making the channel which constitutes the largest element of aluminium, a design which is easy to handle is achieved. It is thus possible to establish the channel with a weight below 25 kg by channels with lengths up to 3.0 m and with a thickness of 2 mm for the cover and 3 mm for the channel, respectively.

The cover is made of steel due to a combination of high strength and low price.

A cable conduit made of pure steel will form a magnetic field which is broken by combining steel and aluminium in the cable conduit.

From the channel, possible electric current is to be conducted to earth, occurring via the connecting plates which at their underside are provided with a tubular bushing for disposition on an earth rod in the shape of a pipe which is pressed down into the earth, thereby defining the level at which the cable conduit is disposed above the ground surface. Insulation is provided between the connecting plates and the channels, ensuring that no electric connection occurs from channel to channel via the connecting plate. Grounding of the cable conduit will thus only occur if e.g. high voltage cables fall down on the cable conduit such that a voltage surmounting the insulation capability appears, and earthing occurs hereby.

When the cable conduit is formed by two U-shaped sections, where the section forming the cover extends beyond the section forming the channel, there is achieved a very simple way of establishing a construction preventing ingress of rainwater, as water impinging on the top side of the cover will flow out over the lateral flanges and down on the outer side of the sidewalls of the channel.

The connection between the two U-shaped sections is established securely by connecting means ensuring that cover and channel are interconnected. When the sections are made of metal, such connecting means can be made as integrated parts of the sections, or as separate elements used for connecting the two sections.

The two small other areas at opposing ends of the channel constitute between 2% and 10%, typically 6-8% of the total length of the channel.

The perforation may typically constitute between 40% and 80% of the area of the bottom plate of the channel, and typically 50-60%.

A large number of evenly distributed perforations are thus provided in the bottom plate of the channel. This ensures that possible ingressing water may be drained out through these perforations serving as drain holes. As the perforations are evenly distributed across the greater part of the length of the cable conduit, secure draining is achieved, irrespective of the inclination of the cable conduit. Typically, a cable conduit will be supported by joining between two channels, but it may also have several supports if the cable conduit is formed by long channel elements. There is a risk of deflection between the supports. By evenly distributed perforations, efficient draining is ensured.

A cable conduit cannot be entirely tight as it is formed by a number of channels with interacting covers arranged end to end. Each of these units consisting of channels and covers are to be disposed with spacing in order to ensure electric insulation between the various channels, as well as there will also be a need for spacing which can absorb longitudinal expansion due to temperature variations. Therefore, it is important that the bottom plate of the channel is provided with drain holes.

In order to avoid damage on cables drawn in the channel of the cable channel when placed in the bottom of the channel, the drain holes are made as perforations pressed downwardly from the inner side of the channel. This is particularly important as the bottom of the channel has a very large number of perforations. Moreover, a sloping surface is ensured around the perforations, providing that water will run out of the channel, and in addition, this shape will ensure that burrs or similar appear around the perforations at the bottom of the channel where cables are drawn. Such burrs may give cause damage to the insulation of the cables when cables are drawn through the channel.

As the U-shaped sections used for making the cable conduits are relatively thin-walled, typically with a material thickness between 2 and 3 mm, frusto-conical projections will appear around each perforation at the bottom side of the channel. Alternatively, it is also possible that depression of material occurs without material being pressed out at the bottom side of the channel.

In practice, it has appeared possible to dispose such channels at a very short distance above the ground surface along railway installations. Compared with cable conduits formed with a bottom of metal mesh, by using perforations with suitably small size, typically less than 8 mm, there will be minimal risk of plants growing in through the perforations in the bottom plate of the channel. The cable conduit will typically be placed at levels which are ½ m above the ground surface, at the most, but which may be located higher.

Moreover, it has also appeared that the perforations can be flame retardant by suitable dimensioning. It is thus preferred that the holes will have a diameter of maximum 8 mm.

According to a further embodiment, the cable conduit is peculiar in that the second area without perforations is provided at opposite ends of the channel, but with mounting holes for receiving mounting bolts passing through the channel and a connecting plate. In order to avoid wrong mounting by passing mounting bolts through the perforations in the bottom, a second area without perforations is provided at each end of the channel. In these perforations are provided mounting holes which can receive the mounting bolts connecting the channel with the connecting plate. The mounting holes can be formed as round holes with diameters adapted to the mounting bolts, or as oblong holes such that a slight angling of two channels in succession is enabled. Hereby it is possible to adapt a cable conduit according to the curvature which can appear on a railway installation.

According to a further embodiment, the cable conduit according to the invention is peculiar in that the connecting plate is provided with mounting slots, and that the mounting holes in the channel are elongated in longitudinal direction of the channel. The holes may run in longitudinal direction of the channel or run obliquely in relation to the longitudinal direction of the channel. By providing the connecting plate with mounting slots running obliquely, it is possible to perform different adjustment of the mutual position of two succeeding channels. The oblique mounting slots will thus make it easier to establish correct disposition of the two channels space apart with the object of insulating and at the same time establish angling of two channels in succession in order that the formed cable conduit can follow the curvature in a railway installation.

According to a further embodiment, the cable conduit according to the invention is peculiar in that the connecting means in the sidewall of the channel includes at least two punched holes in one sidewall, and that interacting connecting means in the lateral flange of the cover includes correspondingly disposed bent out tabs in one lateral flange of the cover, the tabs being received in the punched holes in the sidewall of the channel. By this design, it is possible to make the connecting means simultaneously with the making of channel and cover of the cable conduit. The punching in one hole interacts with the tab placed in the punching. A cover may thus be provided with one side where the tab is placed down over the corresponding sidewall on the channel such that the tabs are passed into the punched holes. The cover may then be pivoted down such that it covers the channel. The cover can be provided with a hole in the opposite lateral flange. This hole may e.g. be the hole used when the cover is suspended for galvanising. Through this hole is passed a screw into a threaded bushing mounted in the sidewall of the channel. Alternatively, in this lateral flange and sidewall there may also be formed projections in that a punched tab on the lateral flange of the cover engages behind a pressed projection at the sidewall of the channel by resilient click action. However, it is preferred to use a screw connection where the screw head can be provided with possibility of operation with special tools in order to prevent inadvertent opening of the cable conduit.

According to a further embodiment, the cable conduit according to the invention is peculiar in that in the second lateral flange of the cover there are formed at least two holes for passage of connecting screws, and that in the second sidewall of the channel there is provided at least two correspondingly disposed threaded bushings for receiving the connecting screws. As mentioned above, the other sidewall of the cover may be provided with threaded bushings which in a way known per se can be of the type which is pressed in as a threaded pop rivet. Connecting screws may hereby be screwed into the threaded bushings and counteract inadvertent removal of the cover.

According to a further embodiment, the cable conduit according to the invention is peculiar in that at their upper free side edge, the sidewalls of the channel have a marginal area which is bent inwardly against the channel in order to facilitate mounting of the cover. By having inwardly bent marginal area, it is easier to put the cover on the channel, even in a situation where only a very little oversize is present compared with the dimension between the lateral flanges of the cover and the outer side of the sidewalls of the channel.

According to a further embodiment, the cable conduit according to the invention is peculiar in that flutings are formed on the top side of the cover plate of the cover in order to make it skidproof. It is hereby safeguarded that people do not slip on a smooth metal surface. The flutings can be provided as flutings of the type known from the flooring on e.g. platforms, scaffolding and similar.

According to a further embodiment, the cable conduit according to the invention is peculiar in that it is made with spacing of minimum 12 mm between succeeding channels and covers, and that an insulator is disposed between the bottom plate of the channels and the connecting plates. With a minimum spacing between succeeding channels it is ensured that there will not be any electric conductive effect through the entire cable conduit in case of damaged electric conductor in one of the channels. If an electric voltage appears in one of the channels exceeding the insulating capability of the insulator, earthing will occur from the individual channel via the connecting plates.

According to a further embodiment, the cable conduit according to the invention is peculiar in that channels and covers are made with lengths between 2 and 5 metres. Hereby is it possible to make channels as well as covers with a weight which can be handled without need of lifting equipment as the weight can be kept below 25 kg per unit.

### Description of the Drawing

The invention will now be explained in detail with reference to the accompanying drawing, wherein
- Fig. 1: shows a perspective view of a cable conduit according to the invention;
- Fig. 2: shows a perspective view of a channel for use in the cable conduit shown in Fig. 1;
- Fig. 3: shows a perspective view of a cover for use in the cable conduit shown in Fig. 1;
- Fig. 4: shows a perspective view of a connecting plate for use in the cable conduit shown in Fig. 1;
- Fig. 5: shows a partially enlarged view of cover shown in Fig. 3;
- Fig. 6: shows an enlarged end view of the channel shown in Fig. 2;
- Fig. 7: shows an enlarged detail of the cover shown in Fig. 3; and
- Fig. 8: shows a perspective view of another embodiment of a connecting plate for use in the cable conduit shown in Fig. 1.

### Detailed Description of Embodiments of the Invention

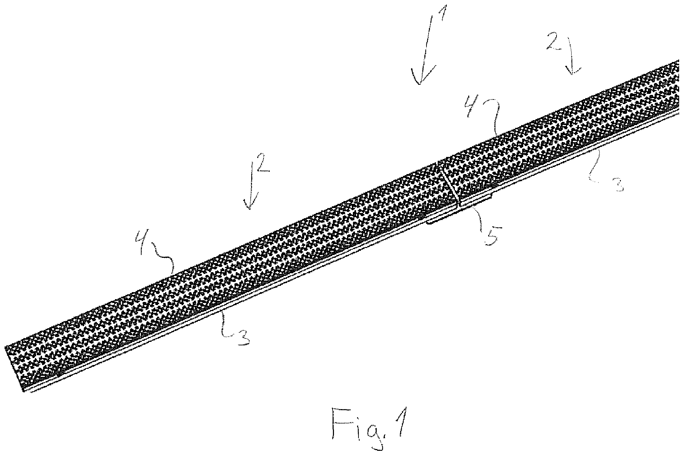

Fig. 1 shows a view of a cable conduit 1 according to the invention. The cable conduit includes a number of single segments 2, each consisting of a channel 3 and a cover 4 which are interconnected by a connecting plate 5 on which two adjacent channels are fastened, such as explained below.

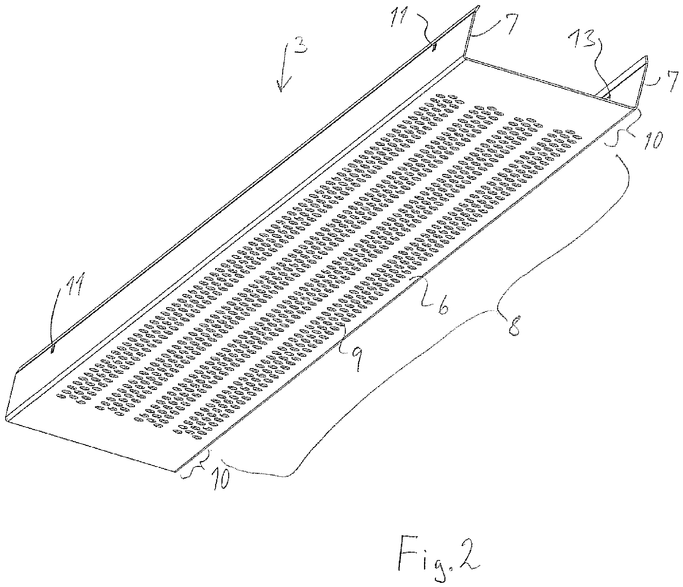

Fig. 2 shows the channel 3 consisting of a bottom plate 6 and two sidewalls 7 which are standing upright at each side of the bottom plate such that the channel 3 appears as a U-shaped section. In the bottom plate 6 is provided a central area 8 extending across largely the entire length of the channel and provided with perforations 9. At each end there is another area 10 of the bottom plate which is not provided with perforations. In each of the other areas 10 mounting holes (not shown) are provided for reception of mounting bolts and to which the channel is screwed on to the connecting plate 5.

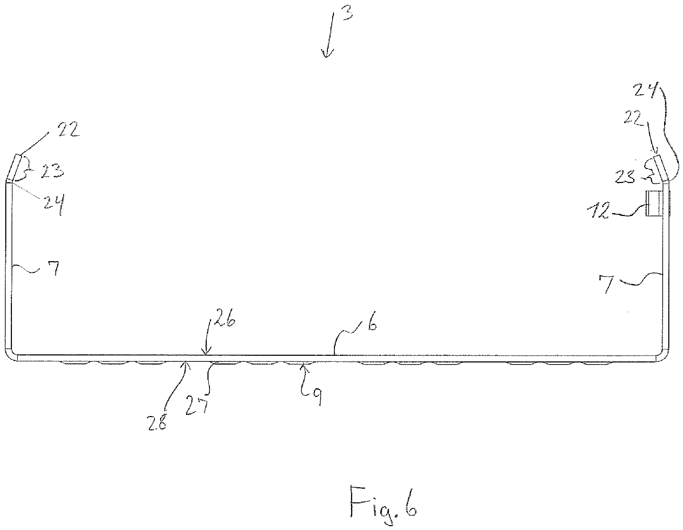

In one sidewall 7 openings 11 are provided, connected with an inserted threaded bushing 12 (see Fig. 6).

In the other sidewall 7, openings 13 are provided.

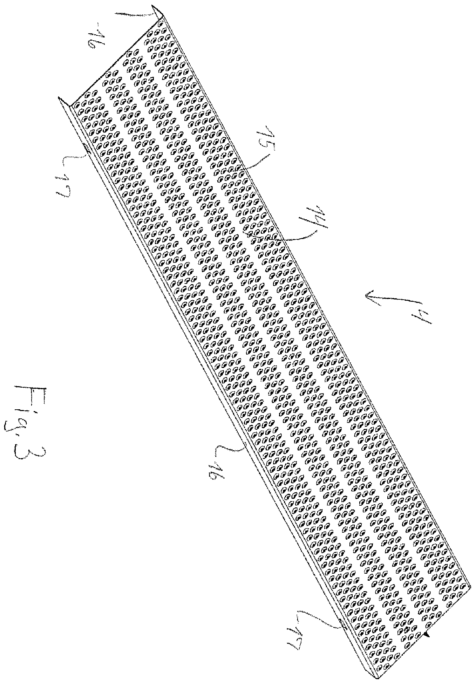

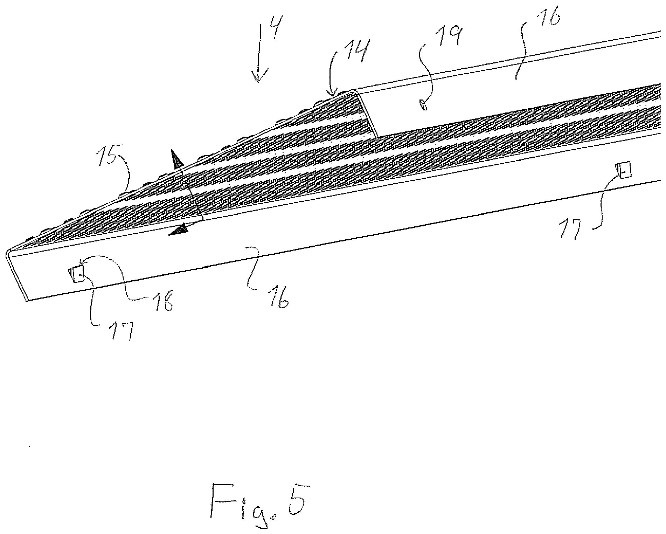

Fig. 3 shows the cover 4 which includes a cover plate 14 provided with flutings 15. At each side of the cover plate 14, lateral flanges 16 are provided. The internal distance between the lateral flanges 16 corresponds to the outer spacing between the sidewalls 7 such that the cover 4 can be placed over the channel 3 with the lateral flanges 16 running at the outer side of the sidewalls 7. In one lateral flange 16 is provided a pressed out tab 17, which more clearly appears from Fig. 5. On Fig. 5 is seen that the tab is pressed out such that it is connected with the remaining part of the lateral flange 16 at the lower side and having an upper bent out end 18. Each of these tabs is provided at positions corresponding to the openings 13 in the sidewall 7 of the channel such that the tabs 17 can engage the openings 13 when the cover 4 is placed upon the channel 3. As shown in Fig. 5, an opening 19 is provided in the opposite lateral flange 16 of the cover. The opening 19 is located at a position corresponding to the position of the openings 11 and the threaded bushings 12 in the channel 3. When the cover is placed over the channel with the tab 17 engaging the opening 13, it will thus be possible to pass a fastening bolt through the opening 19 and screw it into the threaded bushing 12 such that the cover is fastened to the channel.

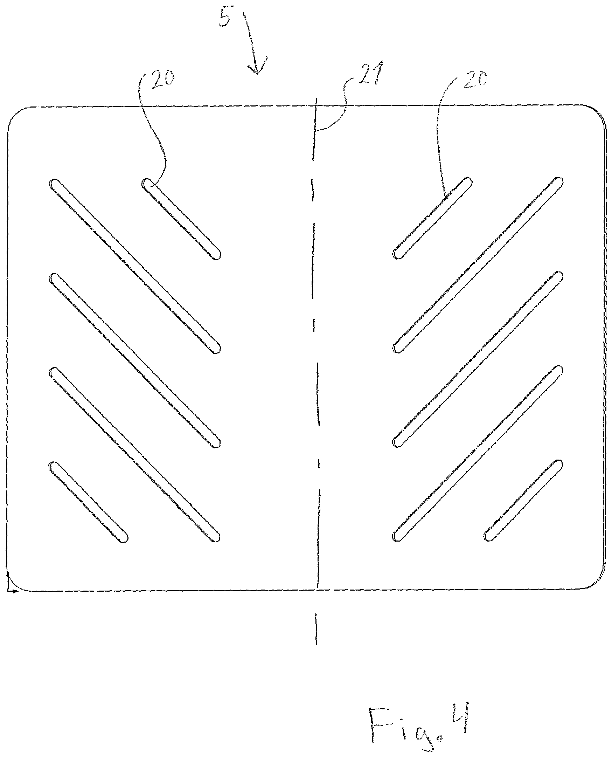

Fig. 4 shows the connecting plate 5. In the connecting plate is provided a number of slots 20 extending obliquely in relation to a longitudinal axis through a cable conduit as indicated by the broken line 21. The slots 20 extend symmetrically in each half of the connecting plate 5 for enabling adjustment of subsequent channels when mounting screws are passed through the slots 20 and interact with mounting holes (not shown) in the end areas 10 in the channel 3. Alternatively, the connecting plate can be provided with fixed holes slightly oversized compared with the applied mounting screws in order to ensure possible angling between two channels in succession.

At its underside, the connecting plate 5 has a tubular bushing (not shown) which is intended to be placed inside or outside a pipe which is pressed down into the earth, and which defines the position of the connecting plate above the ground surface. Usually, the bushing will only be placed loosely on the pipe such that it is the top side of the pipe abutting on the bottom side of the support plate which defines the position of the channel.

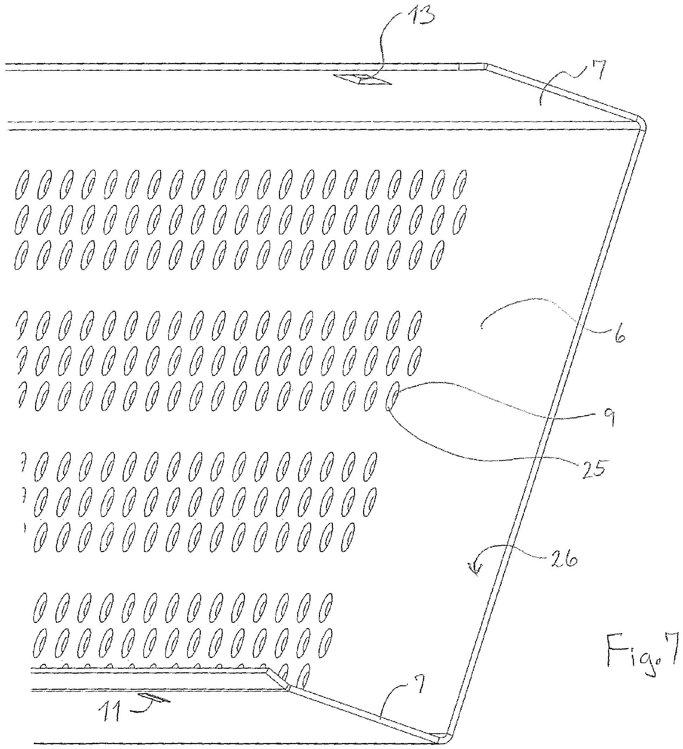

Fig. 6 shows an enlarged end view of the channel 3. It appears that each of the sidewalls 7 at their upper free side edge 22 have a marginal edge area 23 which is bent inwardly against the channel along bending lines 24. Hereby is achieved tapering of the channel, facilitating application of the cover 4. At the bottom of the channel is formed perforations 9 which more clearly appear from Fig. 7. At the inner side of the channel shown in Fig. 7 it appears that a rim area 25 around the perforations 9 is depressed below a plane 26 (see Fig. 6) defining the bottom face in the channel. Hereby, no burrs or other projecting into the channel itself appear by formation of the perforations 9, and the channel thus appears with a smooth bottom face. Due to the thin-walled structure of the channel, frusto-conical projections 27 at the bottom side 28 of the channel will be provided by formation of the depressions.

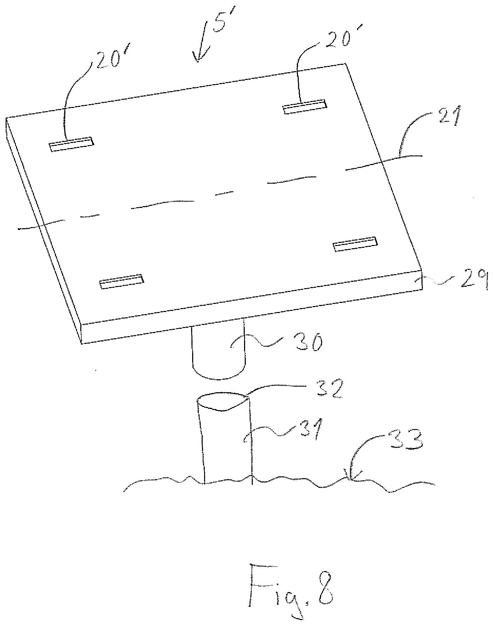

Fig. 8 shows a connecting plate 5' provided with longitudinal slots 20' which run in parallel with the longitudinal axis through the cable conduit. The longitudinal slots 20' are aligned with mounting holes in the end areas 10 of the channel 3. The slots 20' will preferably be provided with slightly greater width than the diameter of mounting screws used for clamping in order to enable angling of succeeding channels such that adaptation after curvature in a railway installation may be effected.

The connecting plate 5' is formed of a plane plate having a plate thickness which is seen in the opening of the slots 21'. At its edge areas, the plate is provided with bent edge 29 such that great strength is provided by using a relatively thin plate. A tubular bushing 30 is provided at the bottom side of the connecting plate 15'. The tubular bushing interacts with an earth rod 31 pressed into the earth such that an upper edge 32 of the earth rod 31 will define the position of the connecting plate 5 above the ground surface 33.

## Claims

1. Use of a cable conduit (1) in railway installations, said cable conduit is of the type with:
- a number of channels (3) for receiving cables and with an upwardly open U-shaped cross-section with a bottom plate (6) and two sidewalls (7) at each side of the bottom plate;
- covers (4) for covering the channels; and
- connecting plates (5) for connecting succeeding channels disposed in continuation of each other for forming a continuous channel, and which are covered by each their cover, where channels, covers and connecting plates are formed of metal, where each cover (4) has a downwardly open U-shaped cross-section with a cover plate (14) and two lateral flanges (16) at each side of the cover plate, where the lateral flanges of the cover are spaced apart corresponding to the outer distance between the sidewalls (7) of the channel such that the cover can be placed over the channel with an inner side of its lateral flanges extending down along the outer side of the sidewalls of the channel, where connecting means (11,12,13,17,19) are provided at the sidewalls of the channel and lateral flanges of the cover for mutual connection of a channel and an associated cover, where the bottom plate is provided with perforations (9) serving as ventilation and drain holes, where a rim area (25) around the perforations is pressed downwards from the inner side of the channel, preferably such that frusto-conical projections (27) appear around each perforation at the bottom side (28) of the channel, **characterised in that** at least a larger central first area (8) of the bottom plate (6) of the channel is delimited by smaller second end areas (10) at the opposing ends of the channel, where the first area (8) is provided with perforations (9) that are evenly distributed across the entire first area and wherein the channel (3) is made of aluminium and that the cover (4) and the connecting plate (5) is made of steel.

2. A cable conduit (1) for the use in railway installations, said cable conduit (1) is of the type with:
- a number of channels (3) for receiving cables and with an upwardly open U-shaped cross-section with a bottom plate (6) and two sidewalls (7) at each side of the bottom plate;
- covers (4) for covering the channels; and
- connecting plates (5) for connecting succeeding channels disposed in continuation of each other for forming a continuous channel, and which are covered by each their cover, where channels, covers and connecting plates are formed of metal, where each cover (4) has a downwardly open U-shaped cross-section with a cover plate (14) and two lateral flanges (16) at each side of the cover plate, where the lateral flanges of the cover are spaced apart corresponding to the outer distance between the sidewalls (7) of the channel such that the cover can be placed over the channel with an inner side of its lateral flanges extending down along the outer side of the sidewalls of the channel, where connecting means (11,12,13,17,19) are provided at the sidewalls of the channel and lateral flanges of the cover for mutual connection of a channel and an associated cover, where the bottom plate (6) of the channel is provided with perforations (9) serving as ventilation and drain holes, where a rim area (25) around the perforations is pressed downwards from the inner side of the channel, preferably such that frusto-conical projections (27) appear around each perforation at the bottom side (28) of the channel, **characterised in that** at least a larger central first area (8) of the bottom plate (6) of the channel is delimited by smaller second end areas (10) at the opposing ends of the channel, where the first area (8) is provided with perforations (9) that are evenly distributed across the entire first area and that the channel (3) is made of aluminium and that the cover (4) and the connecting plate (5) is made of steel.

3. A cable conduit according to claim 2, **characterised in that** the second end area (10) without perforations is provided at opposite ends of the channel, but with mounting holes for receiving mounting bolts passing through the channel (3) and a connecting plate (5).

4. A cable conduit according to claim 3, **characterised in that** the connecting plate (5) is provided with mounting slots (20), and that the mounting holes in the channel are elongated in longitudinal direction of the channel.

5. A cable conduit according to anyone of the claims 2-4, **characterised in that** the connecting means (11,12,13,17,19) in the sidewall of the channel includes at least two punched holes (13) in one sidewall (7), and that interacting connecting means in the lateral flange (16) of the cover (4) includes correspondingly disposed bent out tabs (17) in one lateral flange (16) of the cover (4), the tabs being received in the punched holes in the sidewall of the channel.

6. A cable conduit according to claim 5, **characterised in that** in the second lateral flange (16) of the cover (4) there are formed at least two holes (19) for passage of connecting screws, and that in the second sidewall (7) of the channel (3) there is provided at least two correspondingly disposed threaded bushings (12) for receiving the connecting screws.

7. A cable conduit according to anyone of the claims 2-6, **characterised in that** at their upper free side edge (22), the sidewalls (7) of the channel have a marginal area (23) which is bent inwardly against the channel in order to facilitate mounting of the cover.

8. A cable conduit according to anyone of the claims 2-7, **characterised in that** flutings (15) are formed on the top side of the cover plate (14) of the cover in order to make it skidproof.

9. A cable conduit according to anyone of the claims 2-8, **characterised in that** it is made with spacing of minimum 12 mm between succeeding channels (3) and covers (4), and that an insulator is disposed between the bottom plate (6) of the channels and the connecting plates (5).

10. A cable conduit according to anyone of the claims 2-9, **characterised in that** channels (3) and covers (4) are made with lengths between 2 and 5 metres.

## Patentansprüche

1. Verwendung eines Kabelkanals (1) in Eisenbahninstallationen, der Kabelkanal ist vom Typ mit:
- einer Anzahl von Kanälen (3) zur Aufnahme von Kabeln und mit einem nach oben offenen U-förmigen Querschnitt mit einer Bodenplatte (6) und zwei Seitenwänden (7) auf jeder Seite der Bodenplatte;
- Abdeckungen (4) zum Abdecken der Kanäle; und
- Verbindungsplatten (5) zum Verbinden aufeinanderfolgender Kanäle, die in Fortsetzung zueinander angeordnet sind, um einen kontinuierlichen Kanal zu bilden, und die von jeder ihrer Abdeckungen bedeckt sind, wobei Kanäle, Abdeckungen und Verbindungsplatten aus Metall geformt sind, wobei jede Abdeckung (4) ein nach unten offenen U-förmigen Querschnitt hat mit einer Deckplatte (14) und zwei seitlichen Flanschen (16) auf jeder Seite der Deckplatte, wobei die seitlichen Flansche der Abdeckung entsprechend dem äußeren Abstand zwischen den Seitenwänden (7) des Kanals beabstandet sind, so dass die Abdeckung über dem Kanal platziert werden kann wobei eine Innenseite der seitlichen Flansche sich nach unten entlang der äußeren Seite der Seitenwände des Kanals erstrecken, wobei Verbindungsmittel (11,12,13,17,19) an den Seitenwänden des Kanals und der seitlichen Flansche der Abdeckung zur gegenseitigen Verbindung eines Kanals und einer zugehörigen Abdeckung vorgesehen sind, dass die Bodenplatte mit Perforationen (9) versehen ist, die als Belüftungs- und Abflusslöcher dienen, dass ein Randbereich (25) um die Perforationen von der Innenseite des Kanals nach unten gedrückt wird, vorzugsweise so dass kegelstumpfförmige Vorsprünge (27) um jede Perforation an der Unterseite (28) des Kanals erscheinen, **dadurch gekennzeichnet, dass** mindestens ein größerer zentraler erster Bereich (8) der Bodenplatte (6) des Kanals durch kleinere zweite Endbereiche (10) an den gegenüberliegenden Enden des Kanals begrenzt ist, dass der erste Bereich (8) mit Perforationen (9) versehen ist, die gleichmäßig über den gesamten ersten Bereich verteilt sind und wobei der Kanal (3) aus Aluminium hergestellt ist und dass die Abdeckung (4) und die Verbindungsplatte (5) aus Stahl hergestellt sind.

2. Kabelkanal (1) zur Verwendung in Eisenbahninstallationen, der Kabelkanal ist vom Typ mit:
- einer Anzahl von Kanälen (3) zur Aufnahme von Kabeln und mit einem nach oben offenen U-förmigen Querschnitt mit einer Bodenplatte (6) und zwei Seitenwänden (7) auf jeder Seite der Bodenplatte;
- Abdeckungen (4) zum Abdecken der Kanäle; und
- Verbindungsplatten (5) zum Verbinden aufeinanderfolgender Kanäle, die in Fortsetzung zueinander angeordnet sind, um einen kontinuierlichen Kanal zu bilden, und die von jeder ihrer Abdeckungen bedeckt sind, wobei Kanäle, Abdeckungen und Verbindungsplatten aus Metall geformt sind, wobei jede Abdeckung (4) ein nach unten offenen U-förmigen Querschnitt hat mit einer Deckplatte (14) und zwei seitlichen Flanschen (16) auf jeder Seite der Deckplatte, wobei die seitlichen Flansche der Abdeckung entsprechend dem äußeren Abstand zwischen den Seitenwänden (7) des Kanals beabstandet sind, so dass die Abdeckung über dem Kanal platziert werden kann wobei eine Innenseite der seitlichen Flansche sich nach unten entlang der äußeren Seite der Seitenwände des Kanals erstrecken, wobei Verbindungsmittel (11,12,13,17,19) an den Seitenwänden des Kanals und der seitlichen Flansche der Abdeckung zur gegenseitigen Verbindung eines Kanals und einer zugehörigen Abdeckung vorgesehen sind, dass die Bodenplatte (6) des Kanals mit Perforationen (9) versehen ist, die als Belüftungs- und Abflusslöcher dienen, dass ein Randbereich (25) um die Perforationen von der Innenseite des Kanals nach unten gedrückt wird, vorzugsweise so dass kegelstumpfförmige Vorsprünge (27) um jede Perforation an der Unterseite (28) des Kanals erscheinen, **dadurch gekennzeichnet, dass** mindestens ein größerer zentraler erster Bereich (8) der Bodenplatte (6) des Kanals durch kleinere zweite Endbereiche (10) an den gegenüberliegenden Enden des Kanals begrenzt ist, dass der erste Bereich (8) mit Perforationen (9) versehen ist, die gleichmäßig über den gesamten ersten Bereich verteilt sind und wobei der Kanal (3) aus Aluminium hergestellt ist und dass die Abdeckung (4) und die Verbindungsplatte (5) aus Stahl hergestellt sind.

3. Kabelkanal nach Anspruch 2, **dadurch gekennzeichnet, dass** der zweite Endbereich (10) ohne Perforationen an gegenüberliegenden Enden des Kanals vorgesehen ist, jedoch mit Befestigungslöchern zur Aufnahme von den Kanal (3) durchsetzenden Befestigungsbolzen und einer Verbindungsplatte (5).

4. Kabelkanal nach Anspruch 3, **dadurch gekennzeichnet, dass** die Verbindungsplatte (5) mit Montageschlitzen (20) versehen ist, und dass die Montagelöcher in dem Kanal in Längsrichtung des Kanals länglich sind.

5. Kabelkanal nach einem der Ansprüche 2-4, **dadurch gekennzeichnet, dass** das Verbindungsmittel (11,12,13,17,19) in der Seitenwand des Kanals wenigstens zwei gestanzte Löcher (13) in einer Seitenwand (7) umfasst, und dass die zusammenwirkenden Verbindungsmittel in dem seitlichen Flansch (16) der Abdeckung (4) entsprechend angeordnete, herausgebogene Laschen (17) in einem seitlichen Flansch der Abdeckung (4) umfassen, wobei die Laschen in den gestanzten Löchern in der Seitenwand des Kanals aufgenommen sind.

6. Kabelkanal nach Anspruch 5, **dadurch gekennzeichnet, dass** in dem zweiten seitlichen Flansch (16) der Abdeckung (4) mindestens zwei Löcher (19) für den Durchgang von Verbindungsschrauben ausgebildet sind, und dass in der zweiten Seitenwand (7) des Kanals (3) mindestens zwei entsprechend angeordnete Gewindebuchsen (12) zur Aufnahme der Verbindungsschrauben vorgesehen sind.

7. Kabelkanal nach einem der Ansprüche 2-6, **dadurch gekennzeichnet, dass** die Seitenwände (7) des Kanals an ihrer oberen freien Seitenkante (22) einen Randbereich (23) aufweisen, der nach innen gegen den Kanal gebogen ist, um das Anbringen der Abdeckung zu erleichtern.

8. Kabelkanal nach einem der Ansprüche 2-7, **dadurch gekennzeichnet, dass** auf der Oberseite der Deckplatte (14) der Abdeckung Riffeln (15) ausgebildet sind, um sie rutschfest zu machen.

9. Kabelkanal nach einem der Ansprüche 2-8, **dadurch gekennzeichnet, dass** er mit einem Abstand von mindestens 12 mm zwischen aufeinanderfolgenden Kanälen (3) und Abdeckungen (4) hergestellt ist, und dass ein Isolator zwischen der Bodenplatte (6) der Kanäle und den Verbindungsplatten (5) angeordnet ist.

10. Kabelkanal nach einem der Ansprüche 2-9, **dadurch gekennzeichnet, dass** Kanäle (3) und Abdeckungen (4) mit Längen zwischen 2 und 5 Metern hergestellt sind.

## Revendications

1. L'utilisation d'un conduit de câble (1) dans des installations de chemin de fer, ledit conduit de câble étant du type comportant :
- un certain nombre de canaux (3) pour recevoir des câbles et ayant une section transversale en forme de U ouvert vers le haut avec une plaque inférieure (6) et deux parois latérales (7) de chaque côté de la plaque inférieure;
- des couvercles (4) pour recouvrir les canaux; et
- des plaques de liaison (5) pour connecter des canaux successifs disposés dans la continuité l'une de l'autre pour former un canal continu, et qui sont recouverts par chaque couvercle, où des canaux, des couvercles et des plaques de raccordement sont formés de métal, chaque couvercle (4) présentant une section transversale en forme de U ouvert vers le bas avec une plaque de recouvrement (14) et deux ailes latérales (16) de chaque côté de la plaque de recouvrement, où les ailes latérales du couvercle sont espacées l'une de l'autre par rapport à la distance externe entre les parois latérales (7) du canal de telle sorte que le couvercle peut être placé sur le canal avec un côté interne de ses ailes latérales s'étendant vers le bas le long du côté extérieur des parois latérales du canal, où des moyens de liaison (11,12,13,17,19) sont prévus au niveau des parois latérales du canal et des ailes latérales du couvercle pour une connexion mutuelle d'un canal et d'un couvercle associé, où la plaque inférieure ést pourvue de perforations (9) servant de trous de ventilation et de drainage, où une zone de rebord (25) autour des perforations est pressée vers le bas à partir du côté interne du canal, de préférence de telle sorte que des saillies tronconiques (27) apparaissent autour de chaque perforation au niveau du côté inférieur (28) du canal, **caractérisée en ce qu'**au moins une première zone centrale plus grande (8) de la plaque inférieure (6) du canal est délimitée par des secondes zones d'extrémité plus petites (10) au niveau des extrémités opposées du canal, où la première zone (8) est pourvue de perforations (9) qui sont réparties uniformément sur toute la première zone et le canal (3) est en aluminium et **en ce que** le couvercle (4) et la plaque de liaison (5) sont en acier.

2. Un conduit de câble (1) destiné à être utilisé dans des installations de chemin de fer, ledit conduit de câble (1) étant du type comprenant :
- un certain nombre de canaux (3) pour recevoir des câbles et ayant une section transversale en forme de U ouvert vers le haut avec une plaque inférieure (6) et deux parois latérales (7) de chaque côté de la plaque inférieure;
- des couvercles (4) pour recouvrir les canaux; et
des plaques de liaison (5) pour connecter des canaux successifs disposés dans la continuité l'une de l'autre pour former un canal continu, et qui sont recouverts par chaque couvercle, où des canaux, des couvercles et des plaques de liaison sont formés de métal, chaque couvercle (4) présentant une section transversale en forme de U ouvert vers le bas avec une plaque de recouvrement (14) et deux ailes latérales (16) de chaque côté de la plaque de recouvrement, où les ailes latérales du couvercle sont espacées l'une de l'autre par rapport à la distance externe entre les parois latérales (7) du canal de telle sorte que le couvercle peut être placé sur le canal avec un côté interne de ses ailes latérales s'étendant vers le bas le long du côté extérieur des parois latérales du canal, où des moyens de liaison (11,12,13,17,19) sont prévus au niveau des parois latérales du canal et des ailes latérales du couvercle pour la connexion mutuelle d'un canal et d'un couvercle associé, où la plaque inférieure (6) du canal est pourvue de perforations (9) servant de trous de ventilation et de drain, où une zone de rebord (25) autour des perforations est pressée vers le bas à partir du côté interne du canal, de préférence de telle sorte que des saillies tronconiques (27) apparaissent autour de chaque perforation au niveau du côté inférieur (28) du canal, **caractérisé en ce qu'**au moins une première zone centrale plus grande (8) de la plaque inférieure (6) du canal est délimitée par des secondes zones d'extrémité plus petites (10) au niveau des extrémités opposées du canal, où la première zone (8) est pourvue de perforations (9) qui sont réparties uniformément sur toute la première zone et **en ce que** le canal (3) est en aluminium et **en ce que** le couvercle (4) et la plaque de liaison (5) sont en acier.

3. Conduit de câble selon la revendication 2, **caractérisé en ce que** la deuxième zone d'extrémité (10) sans perforations est prévue au niveau des extrémités opposées du canal, mais avec des trous de montage pour recevoir des boulons de montage passant à travers le canal (3) et une plaque de liaison (5).

4. Conduit de câble selon la revendication 3, **caractérisé en ce que** la plaque de liaison (5) est pourvue de fentes de montage (20), et **en ce que** les trous de montage dans le canal sont allongés dans la direction longitudinale du canal.

5. Conduit de câble selon l'une quelconque des revendications 2 à 4, **caractérisé en ce que** le moyen de liaison (11,12,13,17,19) dans la paroi latérale du canal comprend au moins deux trous poinçonnés (13) dans une paroi latérale (7), et **en ce que** des moyens de liaison coopérant dans l'aile latérale (16) du couvercle (4) comprend des pattes recourbées (17) disposées de manière correspondante dans une aile latérale (16) du couvercle (4), les pattes étant reçues dans les trous poinçonnés dans la paroi latérale du canal.

6. Conduit de câble selon la revendication 5, **caractérisé en ce que**, dans la deuxième aile latérale (16) du couvercle (4), au moins deux trous (19) sont formés pour le passage de vis de connexion, et que, dans la seconde paroi latérale (7) du canal (3) il est prévu au moins deux douilles filetées (12) disposées de manière correspondante pour recevoir les vis de connexion.

7. Conduit de câble selon l'une quelconque des revendications 2 à 6, **caractérisé en ce qu'**au niveau de leur bord latéral libre supérieur (22), les parois latérales (7) du canal présente une zone marginale (23) qui est pliée vers l'intérieur contre le canal afin de faciliter le montage du couvercle.

8. Conduit de câble selon l'une quelconque des revendications 2 à 7, **caractérisé en ce que** des cannelures (15) sont formées sur le côté supérieur de la plaque de recouvrement (14) du couvercle pour le rendre antidérapant.

9. Conduit de câble selon l'une quelconque des revendications 2-8, **caractérisé en ce qu'**il est réalisé avec un espacement de 12 mm minimum entre des canaux (3) et des couvercles (4) successifs, et qu'un isolant est disposé entre la plaque inférieure (6) des canaux et les plaques de connexion (5).

10. Conduit de câble selon l'une quelconque des revendications 2 à 9, **caractérisé en ce que** des canaux (3) et des couvercles (4) sont réalisés avec des longueurs comprises entre 2 et 5 mètres.
